# EUROPEAN PATENT SPECIFICATION

(11) **EP 3 809 131 B1**
(45) Date of publication and mention of the grant of the patent: **13.12.2023**
(21) Application number: 20791141.3
(22) Date of filing: 16.04.2020
(51) Int. Cl.: G01N 30/95, G01N 30/93, G01N 30/86, B01L 3/00, G01N 30/90, G01N 30/88

(54) **ROTARY ANALYSIS SYSTEM**
ROTATIONSANALYSESYSTEM
SYSTÈME D'ANALYSE ROTATIF

(30) Priority: 19.04.2019 KR 20190045792
(43) Date of publication of application: 21.04.2021
(73) Proprietor: LG CHEM, LTD., Yeongdeungpo-gu, Seoul 07336 (KR)
(72) Inventor: PARK, Byung Hyun, Daejeon 34122 (KR); KIM, Byoung Hyoun, Daejeon 34122 (KR); HAN, Su Youn, Daejeon 34122 (KR)
(74) Representative: Goddar, Heinz J.
(86) International application number: PCT/KR2020/005095
(87) International publication number: WO 2020/213954

(56) References cited:
- JP-B2- S5 236 751
- KR-A- 20120 091 630
- KR-A- 20130 000 009
- KR-A- 20130 075 119
- KR-A- 20150 101 307
- NL-A- 8 105 758
- US-A1- 2002 137 218

## Description

CROSS-REFERENCE TO RELATED APPLICATIONSThis application claims the benefit of priority based on Korean Patent Application No. 10-2019-0045792 filed on April 19, 2019.

### FIELD

The present invention relates to a rotary analysis system, and more particularly, to a rotary analysis system that can automate the entire process consisting of movement, chemical reaction and separation of a microfluid on a rotary platform, and perform an image-based analysis.

### BACKGROUND

A carbonyl compound such as an aldehyde and a ketone is widely used in various fields because of its sterilization and strong reduction action, but is known as a harmful substance which is highly toxic and carcinogenic in humans and animals. Therefore, regulation on the carbonyl compound has been strengthened, and thus, it is required to establish a method for detecting and analyzing the harmful carbonyl compound.

Meanwhile, since the carbonyl compound does not have a chromophore, it cannot be detected with a UV detector. Accordingly, a method mainly used comprises reacting the carbonyl compound of a low molecular weight such as the aldehyde and the ketone which is present in air and water with 2,4-dinitrophenylhydrazine (DNPH) to produce a hydrazone derivative, and then detecting the derivatized compound with a high-performance liquid chromatography (HPLC) (see JP 2010-008311A).

This HPLC method is a representative method for measuring the carbonyl compound, and has the advantage of high sensitivity and selective detection. However, there is a problem in that an expensive commercial DNPH cartridge must be used for derivatization and the operation is complicated.

The Use of a thin layer chromatography (TLC) other than the HPLC causes a problem that a eluent is not uniformly deployed on the TLC because the eluent has to be deployed on the TLC only with a capillary force. In addition, there is a problem in that separation is not easily performed due to a change in a deployment speed by vaporization of the eluent.

Further, since the conventional HPLC or TLC method only allows separation of a mixed sample, a separate device for preprocessing a sample so as to convert the sample into a form suitable for its separation and analysis is required.

NL 8105 758 A relates to an arrangement intended for separating solutes from a mixture by radial thin-layer chromatography. The chromatography plate carrying the absorbent is rotated during or after the central application of the eluent (washing agent). The plate is rotated about its center at a speed of 100-6000 rpm. The eluent may be supplied under pressure. The plate is clamped between a (driven) carrier and a cover plate provided with a layer of sealing material such as PTFE. Densitometric quantitative analysis may be carried out by rotating the plate using an optical scanning detector linearly moved across it

US 2002/137218 A1 relates to methods and apparatus for performing microanalytic and microsynthetic analyses and procedures. A microsystem platform and a micromanipulation device is provided for manipulating the platform that utilizes the centripetal force resulting from rotation of the platform to motivate fluid movement through microchannels. The microsystem platforms are also optionally provided having system informatics and data acquisition, analysis and storage and retrieval informatics encoded on the surface of the disk opposite to the surface containing the fluidic components. Methods specific for the apparatus for performing any of a variety of microanalytical or microsynthetic processes are described.

### SUMMARY

### TECHNICAL CHALLENGES

The present invention is to solve the above problems, and a purpose of the present invention is to provide an analysis system for separating and detecting aldehydes or ketones in a more economical and simple manner capable of replacing a HPLC that uses an expensive commercial DNPH cartridge and is operated complicatedly.

### TECHNICAL SOLUTIONS

The invention and the technical solutions are defined in independent claim 1 and its dependent claims.

### ADVANTAGEOUS EFFECTS

According to the present invention, it is possible to provide a compact rotary analysis system that can be conveniently applied in the field while being capable of separating and detecting color-based aldehydes or ketones economically and inexpensively, compared to the expensive HPLC which is the conventional equipment for analyzing the aldehydes or the ketones.

In particular, the analysis system of the present invention can automate the entire process consisting of movement, chemical reaction and separation of a microfluid by mounting a TLC plate on a rotary platform and then controlling rotation of the rotary platform through a control unit.

Further, according to the analysis system of the present invention, all of the rotation steps can be programmed, and a mixing effect of the fluid can be enhanced by controlling a rotational direction of the rotary platform.

Further, according to the analysis system of the present invention, both organic and inorganic materials can be analyzed by modifying a microfluidic structure provided on the rotary platform, and all the processes consisting of pretreatment, reaction, separation and detection of the sample can be carried out sequentially.

Further, after all the experimental processes performed in the rotary analysis system of the present invention are terminated, an image-based analysis may be performed with a captured image by capturing the TLC plate of the rotary platform through a camera portion. A HSV algorithm transformation enables colorimetric analysis of images for sections of the TLC plate on the rotary platform. A plotting may be performed by extracting an element of a specific color, and qualitative and quantitative analysis of specific components may be performed through a partial integration process.

Further, in the device for detecting the aldehydes or the ketones according to the present invention, when a eluent is deployed on the TLC, a capillary force as well as a centrifugal force acts as a propulsive force of the eluent, so that a solvent can be deployed on the TLC uniformly.

Further, in the device for detecting the aldehydes or the ketones according to the present invention, a derivatization reaction process for converting the aldehydes or the ketones into the form that can be analyzed on the TLC, and a separation process for separating the derivatized compound on the TLC can be performed in one device integrally. That is, the device for detecting the aldehydes or the ketones according to the present invention may be the rotary micro device that can integrate the derivatization of the aldehydes or the ketones and the TLC separation.

Further, a plurality of microfluidic structures provided in the analysis system of the present invention include a sample storage unit capable of derivatizing the aldehyde or ketone samples and a separation unit, respectively, so that the derivatization and the separation of the aldehydes or the ketones can be performed integrally, and derivative materials of the aldehydes or the ketones separated from the separation unit can be qualitatively or quantitatively analyzed through an image analysis.

Further, the present invention has an advantage that a plurality of samples containing the aldehydes or the ketones can be separated and detected simply and quickly at the same time.

Further, in the analysis system of the present invention, the eluent can be moved at a constant speed as the eluent is first absorbed to a absorption pad provided in the separation unit and then discharged. That is, the absorption pad provided in the separation unit can allow the sample to be stably separated in the separation unit by preventing diffusion due to the wettability of the eluent, which is caused when the eluent is injected into the separation unit in the moving phase by a rotating force, and by moving the eluent at a constant speed.

Further, the analysis system of the present invention can control a moving speed of the solvent onto the TCL by adjusting a strength of the rotating force, and can improve a resolution of the TLC by drying the solvent remaining on the TLC by rotation after the sample is separated once and repeating inflow of the eluent and the TLC separation by applying the rotating force again.

### BRIEF DESCRIPTION OF THE DRAWINGS

FIG. 1 is a block diagram showing a rotary analysis system of the present invention.
FIG. 2 is a plan view showing a rotating unit.
FIG. 3 shows a microfluidic structure in the rotating unit of FIG. 2.
FIGS. 4a to 4d show each layer of a rotary platform including a microfluidic structure.
FIG. 5 is a block diagram showing a rotating unit and a control unit.
FIG.6 is a block diagram showing a shooting unit and a control unit.
FIG. 7 is a block diagram showing an analysis unit.
FIG. 8 is photographs showing the experimental results according to a rotary analysis system of the present invention.
FIG. 9 is a graph showing a change in a rotation speed over time in a rotary platform.
FIG. 10 is photographs showing a process of converting an image with an image conversion unit of an analysis unit.
FIG. 11 is a perspective view showing an appearance of a rotary analysis system of the present invention.
FIG. 12 is a perspective view showing the inside of the rotary analysis system of the present invention.

### DETAILED DESCRIPTION

A rotary analysis system of the present invention comprises:
a rotating unit including a rotary platform, and having a TLC plate on which movement of a fluid sample and an eluent is controlled on the rotary platform by rotational motion of the rotary platform, and aldehydes or ketones of the sample are separated and deployed with the eluent; a shooting unit for capturing an image of components of the sample separated in the rotating unit; a control unit for controlling rotation condition of the rotating unit and capturing condition of the shooting unit; and an analysis unit for analyzing the image captured by the shooting unit.

In the rotary analysis system of the present invention, the rotating unit may comprise the rotary platform of a disk shape. The rotary analysis system of the present invention comprises a microfluidic structure disposed on the rotary platform,
wherein the microfluidic structure includes a sample storage unit into which the fluid sample containing the aldehydes or the ketones is injected to derivatize the aldehydes or the ketones; an eluent storage unit into which the eluent is injected; a separation unit having the TLC plate that receives the sample and the eluent from the sample storage unit and the eluent storage unit, and separates and deploys the aldehydes or the ketones of the sample with the eluent; a first microfluidic channel (siphon channel) that is a passage through which the sample moves to the separation unit, and connects the sample storage unit and the separation unit; a second microfluidic channel that is a passage through which the eluent moves to the separation unit, and connects the eluent storage unit and the separation unit; and an absorption pad that receives the eluent from the eluent storage unit and discharges it to the TLC plate.

In the rotary analysis system of the present invention, the separation unit includes a sample introduction portion for receiving the sample from the sample storage unit, an eluent introduction portion for receiving the eluent from the eluent storage unit, and a deployment portion in which the aldehydes or the ketones of the sample are separated and deployed with the eluent, and the absorption pad may be provided in the eluent introduction portion.

In the rotary analysis system of the present invention, the center of rotation having a rotational axis of the rotary platform therein is the center of the rotary platform; a longitudinal direction of the separation unit is a radial direction of the rotary platform; and the deployment portion, the sample introduction portion, and the eluent introduction portion may be disposed in the order of the eluent introduction portion, the sample introduction portion, and the deployment portion or in the order of the deployment portion, the sample introduction portion, and the eluent introduction portion, from the center of rotation in the longitudinal direction of the separation unit.

In the rotary analysis system of the present invention, the rotary platform rotates in a direction perpendicular to a surface of the rotary platform as a direction of the rotational axis. In the separation unit, the TLC plate on which the eluent is deployed by a capillary force is disposed across the deployment portion and the eluent introduction portion such that a longitudinal direction of the TLC plate becomes a direction of a centrifugal force generated by rotation. The eluent is discharged from the eluent introduction portion to the deployment portion, and the eluent in the deployment portion may be propelled by a combined force of the capillary force and the centrifugal force.

In the rotary analysis system of the present invention, the aldehydes or the ketones that may be contained in the sample may include at least one selected from the group consisting of acetaldehyde, acetone, acrolein, benzaldehyde, butyraldehyde, formaldehyde, and propionaldehyde.

In the rotary analysis system of the present invention, the inside of the sample storage unit may be filled with 2,4-dinitrophenylhydrazine-coated silica (2, 4-DNPH-coated silica) in the form of beads.

In the rotary analysis system of the present invention, the microfluidic structure may be provided in plurality, and the plurality of microfluidic structures may accommodate different fluid samples from each other, respectively, and be disposed radially symmetrically on the rotary platform.

In the rotary analysis system of the present invention, the first microfluidic channel and the second microfluidic channel includes a bent portion, respectively, and the number of the bent portions of the second microfluidic channel may be more than the number of the bent portions of the first microfluidic channel.

In the rotary analysis system of the present invention, the microfluidic structure further includes a waste channel for isolating a part of the sample moving from the sample storage unit to the separation unit, and the waste channel may be a channel branched from the first microfluidic channel.

In the rotary analysis system of the present invention, the rotating unit may include a driving portion for providing a rotating force to the rotary platform and an encoder for measuring one or more values of a rotation angle, a number of rotations, and a rotation direction of the driving portion, and the control unit may include an input portion for receiving a condition value of rotation and a rotation control portion for controlling the driving portion based on the measured value of the encoder or the condition value of rotation input to the input portion.

In the rotary analysis system of the present invention, the condition value of rotation may include one or more values of rotation speed, rotation direction, rotation time, rotation sequence, and shake value.

In the rotary analysis system of the present invention, the shooting unit may include an illumination portion for irradiating light to the rotary platform and a camera portion for capturing the image in the rotary platform, and the control unit may include an input portion for inputting a capturing condition of the shooting unit and a shooting control portion for controlling the illumination portion or the camera portion based on the capturing condition.

In the rotary analysis system of the present invention, the capturing condition may include one or more of amplification, exposure, and capturing area values.

In the rotary analysis system of the present invention, the analysis unit may include an image conversion unit for converting the image captured by the shooting unit to a converted image and a chromatogram generation unit for generating a chromatogram from the image converted by the image conversion unit.

In the rotary analysis system of the present invention, the image conversion unit may adjust one or more of hue, saturation, and brightness of the captured image in order to differentiate differences in an expression color.

In the rotary analysis system of the present invention, the image conversion unit may convert the captured image into the converted image through HSV (Hue/Saturation/Value) conversion.

In the rotary analysis system of the present invention, the image conversion unit may convert the captured image into the converted image through RGB (Red-Green-Blue) conversion.

In the rotary analysis system of the present invention, the chromatogram generation unit may calculate one or more of a type of sample components, a content of each component, and a retention factor value of each component.

The rotary analysis system of the present invention ,although not claimed in the appended claims, may further comprise a housing for accommodating the rotating unit and the shooting unit therein, wherein a material of the housing includes polyurethane.

The housing may have a width of 20 cm to 60 cm, a length of 20 cm to 60 cm, and a height of 30 cm to 90 cm.

### BEST MODE

Hereinafter, a rotary analysis system of the present invention will be described in detail.

Preferred embodiments of the present invention will be described in detail with reference to the accompanying drawings. The terms or words used in the specification and claims should not be construed to be limited to the ordinary or dictionary meanings, and should be interpreted as meanings and concepts consistent with the technical idea of the present invention, based on the principle that the inventor can properly define concepts of the terms in order to best explain his/her own invention.

Throughout the specification, in case it is described that a certain portion is "connected" to other portion, this means not only that the portion is "directly connected" to the other portion, but also that another member is interposed therebetween and is "electrically connected" to each other.

Throughout the specification, in case it is described that a certain portion "comprises" or "includes" a certain constitutive element, this means that the portion may further comprise or include other constitutive element without excluding it, unless otherwise stated. In addition, the terms such as "... unit", "... portion", "... group", and "module" described in the specification refer to a unit that processes at least one function or operation.

Further, regardless of the reference numerals, the same or corresponding constitutive elements will be given the same reference numerals and redundant description thereof will be omitted, and, for convenience of description, sizes and shapes of each constitutive member shown may be exaggerated or reduced.

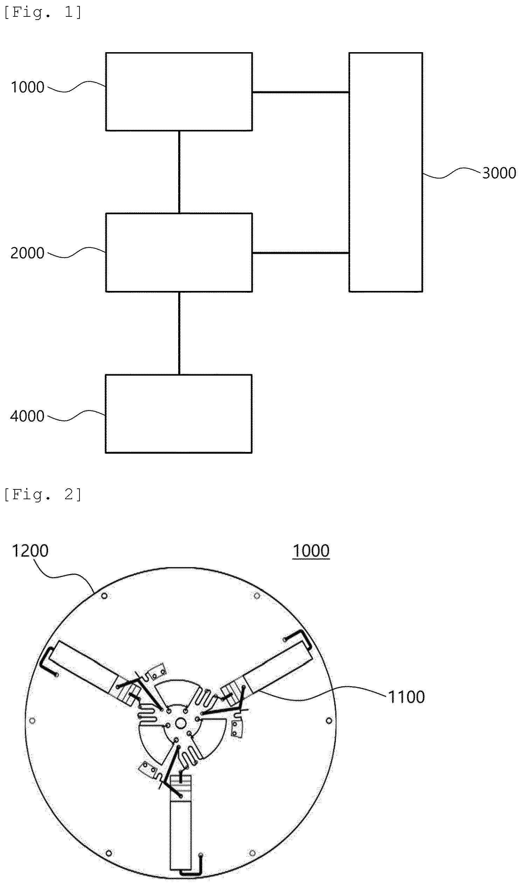

As shown in FIG.1, a rotary analysis system of the present invention comprises: a rotating unit 1000 including a rotary platform, and controlling movement of a fluid sample and an eluent on the rotary platform 1200 by rotational motion of the rotary platform; a shooting unit 2000 for capturing components of the sample separated from the rotating unit 1000; a control unit 3000 for controlling rotation condition of the rotating unit 1000 and capturing condition of the shooting unit 2000; and an analysis unit 4000 for analyzing the image captured by the shooting unit 2000.

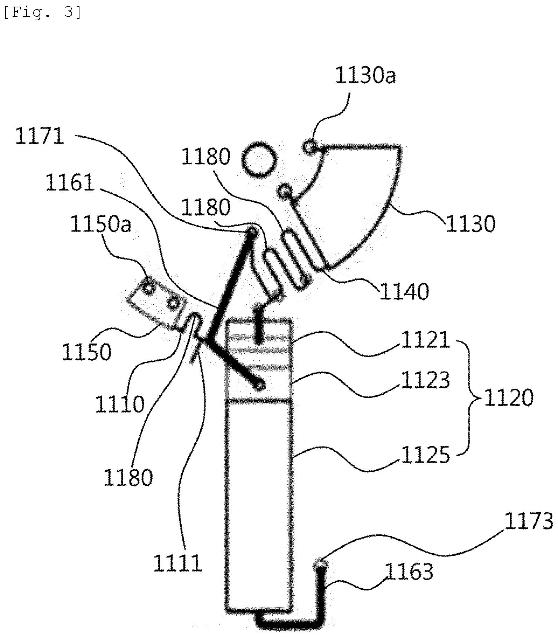

FIG. 2 shows a rotating unit 1000, and FIG. 3 shows a microfluidic structure 1100 in the rotating unit of FIG. 2.

First, referring to FIG. 2, the rotating unit 1000 includes the rotary platform 1200 and the microfluidic structure 1100 provided in the rotary platform 1200. The rotary platform 1200 may be, for example, a circular disk, and a size thereof may be, for example, 14 cm to 17 cm in diameter.

The rotary platform 1200 includes the microfluidic structure 1100. The rotary platform 1200 may include one microfluidic structure 1100 or a plurality of microfluidic structures 1100. The plurality of microfluidic structures 1100 are radially symmetrically located relative to the center of rotation on the rotary platform 1200. The center of rotation may be located at the center of the rotary platform 1200, and may be a position of a rotational axis on which the rotary platform 1200 rotates. For example, FIG. 2 shows that three microfluidic structures 1100 are disposed on the rotary platform 1200. Depending on various environments in which the present invention is implemented, for example, the sizes of the rotary platform 1200 and the plurality of microfluidic structures 1100, they may be disposed in three, four, five, six, or more numbers.

The plurality of microfluidic structures 1100 in the rotating unit 1000 include a sample storage unit 1150 capable of derivatizing the aldehyde or ketone sample, and a separation unit 1120, respectively, and the derivative material of the aldehydes or the ketones separated from the separation unit 1120 may be qualitatively or quantitatively analyzed through an image analysis.

Referring to FIG. 3, the microfluidic structure 1100 includes a sample storage unit 1150 into which a fluid sample containing the aldehydes or the ketones is injected to derivatize the aldehydes or the ketones, an eluent storage unit 1130 into which an eluent is injected, a separation unit 1120 having a TLC plate that receives the sample and the eluent from the sample storage unit 1150 and the eluent storage unit 1130, and separates and deploys the aldehydes or the ketones of the sample with the eluent, a first microfluidic channel (siphon channel) 1110 that is a passage through which the sample moves to the separation unit 1120, and connects the sample storage unit 1150 and the separation unit 1120, a second microfluidic channel 1140 that is a passage through which the eluent moves to the separation unit 1120, and connects the eluent storage unit 1130 and the separation unit 1120, and an absorption pad that receives the eluent from the eluent storage unit 1130 and discharges it to the TLC plate.

The microfluidic structure 1100 may receive the fluid sample containing a plurality of types of aldehydes or ketones, and separate and detect them. The aldehydes or the ketones that may be contained in the fluid sample may include, for example, at least one selected from the group consisting of acetaldehyde, acetone, acrolein, benzaldehyde, butyraldehyde, formaldehyde, and propionaldehyde.

The sample storage unit 1150 includes an inlet 1150a having a space that can accommodate the fluid sample containing the aldehydes or the ketones and injecting the fluid sample through the space. The inside of the sample storage unit 1150 may be filled with 2,4-DNPH-coated silica in the form of beads. The aldehydes or the ketones do not have a chromophore, and thus, they are first derivatized with the DNPH in the sample storage unit 1150 before the fluid sample containing the aldehydes or the ketones moves to the separation unit 1120.

The sample storage unit 1150 and the separation unit 1120 are connected to the first microfluidic channel 1110. In addition, the sample storage unit 1150 may include a blocking portion (not shown), and the blocking portion serves to confine the sample to an internal space of the sample storage unit 1150 using steps of the channel so as to prevent the sample from flowing into the first microfluidic channel 1110 directly when the sample is injected through the inlet 1150a. The blocking portion (not shown) is provided with an opening part through which the sample can move from the inlet 1150a to an rear end part of the sample storage unit 1150. The sample moves from the inlet 1150a to the rear end part of the sample storage unit 1150 by rotation of the rotary platform 1200. In the sample storage units 1150, the rear end part of the sample storage unit 1150, that is, the vicinity of the place where the sample storage unit 1150 and the first microfluidic channel 1110 are connected, has, for example, a streamlined shape, so that when the fluid sample injected into the sample storage unit 1150 moves to the first microfluidic channel 1110, the structural interference is minimized to allow the fluid sample injected into the sample storage unit 1150 to move to the first microfluidic channel 1110 without any residual amount.

The eluent storage unit 1130 includes an inlet 1130a having a space that can accommodate the eluent and injecting the eluent into the space. The eluent storage unit 1130 and the separation unit 1120 are connected to a second microfluidic channel 1140. In addition, the eluent storage unit 1130 may include a blocking portion (not shown), and the blocking portion serves to confine the sample to an internal space of the eluent storage unit 1130 using the steps of the channel so as to prevent the sample from flowing into the second microfluidic channel 1140 directly when the sample is injected through the inlet 1130a. The blocking portion (not shown) is provided with an opening part through which the eluent can move from the inlet 1130a to an rear end part of the eluent storage unit 100. The eluent moves from the inlet 1130a to the rear end part of the eluent storage unit 1130 by rotation of the rotary platform 1200. In the eluent storage units 1130, the rear end part of the eluent storage unit 1130, that is, the vicinity of the place where the eluent storage unit 1130 and the second microfluidic channel 1140 are connected, has, for example, a streamlined shape, so that when the fluid sample injected into the eluent storage unit 1130 moves to the second microfluidic channel 1140, the structural interference is minimized to allow the fluid sample injected into the eluent storage unit 1130 to move to the second microfluidic channel 1140 without any residual amount.

The aldehydes or the ketones of the sample are separated and deployed in the separation unit 1120, and the separation unit 1120 may be provided with the absorption pad and the TLC plate.

The separation unit 1120 includes a sample introduction portion 1123 for receiving the sample from the sample storage unit 1150, an eluent introduction portion 1121 for receiving the eluent from the eluent storage unit 1130, and a deployment portion 1125 for separating and deploying the aldehydes or the ketones of the sample with the eluent.

The separation unit 1120 is formed on the rotary platform 1200 such that a longitudinal direction of the separation unit 1120 becomes a radial direction of the rotary platform 1200. The center of rotation of the rotary platform 1200 may be the center of the rotary platform 1200. Therefore, when the rotary platform 1200 rotates, a centrifugal force can act on the eluent in the separation unit 1120 in a movement direction of the eluent. Specifically, the deployment portion 1125 may be formed at a position farther from the center of rotation than the sample introduction portion 1123 and the eluent introduction portion 1121. More specifically, the eluent introduction portion 1121, the sample introduction portion 1123, and the deployment portion 1125 may be disposed in this order, wherein the eluent introduction portion 1121 is disposed closest to the center of rotation and the deployment portion 1125 is disposed farthest from the center of rotation.

The rotary platform may rotate in a direction perpendicular to a surface of the rotary platform as a direction of the rotational axis. In the separation unit 1120, the TLC plate on which the eluent is deployed by a capillary force may be disposed across the deployment portion 1125 and the eluent introduction portion 1121 such that a longitudinal direction of the TLC plate becomes a direction of a centrifugal force generated by rotation.

Accordingly, when the eluent is discharged from the eluent introduction portion 1121 to the deployment portion 1125, the eluent in the deployment portion 1125 is propelled by a combined force of the capillary force and the centrifugal force. In addition, a strength of the centrifugal force can be controlled by adjusting a rotation speed, and thus, the propulsive force of the eluent can also be controlled by adjusting the rotation speed. Therefore, in the device for detecting the aldehydes or the ketones according to the present invention, when the eluent is deployed on the TLC plate, the capillary force as well as the centrifugal force acts as the propulsive force of the eluent, so that the solvent can be deployed even on the TLC plate uniformly and occurrence of a change in the deployment speed can be prevented by volatilization of the eluent. Specifically, If the fluid is deployed on the TLC plate only by the capillary force, the fluid may volatilize, which makes uniform control of the fluid on the TLC plate difficult. However, in the micro device for detecting the aldehydes or the ketones according to the present invention, the centrifugal force acts together with the capillary force to prevent the deployment error on the TLC plate due to volatilization of the fluid.

The TLC plate may be disposed across the deployment portion 1125, the sample introduction portion 1123, and the eluent introduction portion 1121. The absorption pad is provided at the eluent introduction portion 1121 and is disposed in an overlapped state with the TLC plate. The absorption pad accommodated in the eluent introduction portion 1121 absorbs the eluent received from the eluent storage unit 1130 and discharge it on the TLC plate uniformly.

The eluent transferred to the eluent introduction portion 1121 is absorbed to the absorption pad accommodated inside the eluent introduction portion 1121, and the eluent absorbed to the absorption pad can be moved to the separation unit 1120 uniformly. That is, the eluent moved from the eluent storage unit 1130 to the eluent introduction portion 1121 can be absorbed by the absorption pad, and then discharged to the deployment portion 1125 after passing through the sample introduction portion 1123 in an uniform amount and at a constant speed.

As such, in the rotating unit 1000 of the present invention, since the eluent is first absorbed to the absorption pad and then transferred to the separation unit 1120, the eluent can be discharged to the separation unit 1120 at the constant speed. That is, the absorption pad can prevent diffusion due to a wettability of the eluent generated when the eluent is injected into the separation unit 1120 by a rotating force, and deploy the eluent on the separation unit 1120 uniformly.

The absorption pad may be made of a porous adsorbent material, for example, a material of the absorption pad may include a fiber with -OH group similar to the chemical structure of a cellulose. Specifically, the absorption pad may be made of a cellulose fiber, a gelatin fiber, a starch fiber, or a mixture of two or more thereof.

Further, the absorption pad is provided at one end of the TLC plate, and an area of the absorption pad can be appropriately selected depending on an area of the TLC plate. For example, the area may occupy a range of 5 to 10 % in an area of the separation unit 1120. As an example, in case the separation unit 1120 has the area of 5 cm × 1 cm, the length × width × height of the absorption pad provided at one end of the separation unit 1120 may be 0.5 cm × 1 cm × 0.14 cm. That is, in case the TLC plate has a length of 5 cm and a width of 1 cm, the absorption pad may be formed with a length of 0.5 cm and a width of 1 cm, which is 10% of the area of the TLC plate. The width of the absorption pad may be greater than or equal to that of the TLC plate. By forming the width of the absorption pad to be greater than or equal to that of the TLC plate, the eluent is first adsorbed to the absorption pad, and then discharged to the deployment portion uniformly.

That is, the device for detecting the aldehydes or the ketones according to the present invention can adjust a distributing action between the sample, the fixed phase, and the eluent and improve a resolution by controlling a discharging amount and speed of the eluent through the centrifugal force and the absorption pad.

The TLC plate provided to the separation unit 1120 may be coated with a material that can react with the aldehydes or the ketones of the fluid sample, so that the fluid sample can be deployed. The separation unit 1120 is provided, for example, with an RP-18 F254s TLC plate, and the TLC plate may be the one that a material having a C18 group bonded to a silica is coated on an aluminum support to a thickness of 0.2 mm. The TLC plate is coated with F254s that can detect fluorescence, and may use water up to 40 %. The size of the TLC plate may be 4.5 cm to 5 cm in a length and 0.5 cm to 2 cm in a width. The length of the separation unit 1120 may preferably be shorter than two-thirds of the radius of the rotary platform 1200. This TLC plate may be applied to the sample of 0.5 µL to 10 µL. The TLC plate is disposed on the separation unit 1120, and a longitudinal direction of the TLC plate may also be disposed to be a radial direction of the rotary platform 1200.

One end of the first microfluidic channel 1110 is connected to the sample storage unit 1150, and the other end of the first microfluidic channel 1110 may be connected to the sample introduction portion 1123. One end of the second microfluidic channel 1140 is connected to the eluent storage unit 1130, and the other end of the second microfluidic channel 1140 may be connected to the eluent introduction portion 1121.

The other end of the first microfluidic channel 1110 is connected to the sample introduction portion 1123 of the separation unit 1120. The other end of the first microfluidic channel 1110 may be located in the sample introduction portion 1123 near the eluent introduction portion 1121 such that the sample can be provided from the first microfluidic channel 1110 to the sample introduction portion 1123 and deployed on the deployment portion 1125 by the eluent provided in the eluent introduction portion 1121.

The other end of the second microfluidic channel 1140 is connected to the eluent introduction portion 1121 of the separation unit 1120. The eluent is provided from the second microfluidic channel 1140 to the eluent introduction portion 1121, and the eluent provided to the eluent introduction portion 1121 may move to the deployment portion 1125 through the sample introduction portion 1123. Therefore, the aldehydes or the ketones of the sample in the sample introduction portion 1123 may be deployed on the TLC plate by the eluent.

The first microfluidic channel 1110 and the second microfluidic channel 1140 may include a bent portion 1170, respectively. The bent portion 1170 may include, for example, a tubular part of a "U" shape. The bent portion 1170 may delay movement of the fluid in the microfluidic channels. The number of bent portions 1170 of the second microfluidic channel 1140 may be more than the number of bent portions 1170 of the first microfluidic channel 1110. This is because the sample must be first introduced into the separation unit 1120 through the first microfluidic channel 1110, and then be subsequently introduced into the separation unit 1120 through the second microfluidic channel 1140.

The microfluidic structure 1100 may include a first vent hole 1151 and a second vent hole 1153 through which an external gas is injected into the separation unit 1120 or a gas inside the separation unit 1120 is discharged to an exterior, a first air circulation channel 1161 which is a passage through which the gas moves between the first vent hole 1151 and the separation unit 1120, and a second air circulation channel 1163 which is a passage through which the gas moves between the second vent hole 1153 and the separation unit 1120. The first air circulation channel 1161 may be connected to one end of the separation unit 1120, and the second air circulation channel 1163 may be connected to the other end of the separation unit 1120. Specifically, a connection point between the first air circulation channel 1161 and the separation unit 1120 is referred to as a first connection point, and a connection point between the second air circulation channel 1163 and the separation unit 1120 is referred to as a second connection point. In this case, the first connection point may be closer to the center of rotation than the deployment portion 1125, and the second connection point may be farther from the center of rotation than the deployment portion 1125. That is, the deployment portion 1125 may be formed between the first connection point and the second connection point on a virtual line formed by the radial direction of the rotary platform 1200.

The first air circulation channel 1161 plays a role to prevent the formation of bubbles due to a pressure in the first microfluidic channel 1110 or the second microfluidic channel 1140 and move the sample smoothly, by discharging the air trapped in the first microfluidic channel 1110 or the second microfluidic channel 1140 when the sample is injected into the separation unit 1120 by the rotating force.

Further, the second air circulation channel 1163 serves to prevent a pressure rise and a moisture condensation inside the separation unit 1120 by discharging the air inside the separation unit 1120 through the second vent hole 1153 when the separation process is performed by the rotating force.

Accordingly, the air introduced into the first vent hole 1151 moves to the separation unit 1120 through the first air circulation channel 1161, and may be discharged to the second vent hole 1153 through the second air circulation channel 1163 via the separation unit 1120. By introducing the first air circulation channel 1161 and the second air circulation channel 13, an evaporation rate of the fluid sample and the eluent in the separation unit 1120 can be increased while preventing the moisture condensation in the separation unit 1120. A backflow of the sample and the eluent to the first air circulation channel 1161 and the second air circulation channel 1163 can be prevented by drilling holes having a thickness of about 1 mm and a diameter of about 0.8 mm in the first air circulation channel 1161 and the second air circulation channel 1163 to form a capillary valve caused by an air pressure.

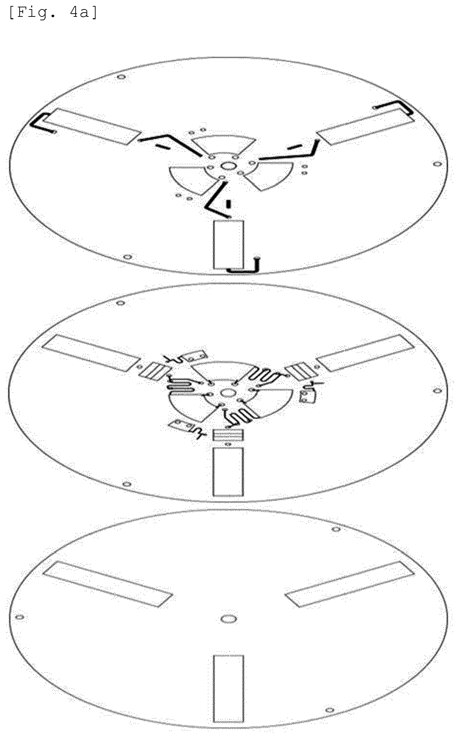

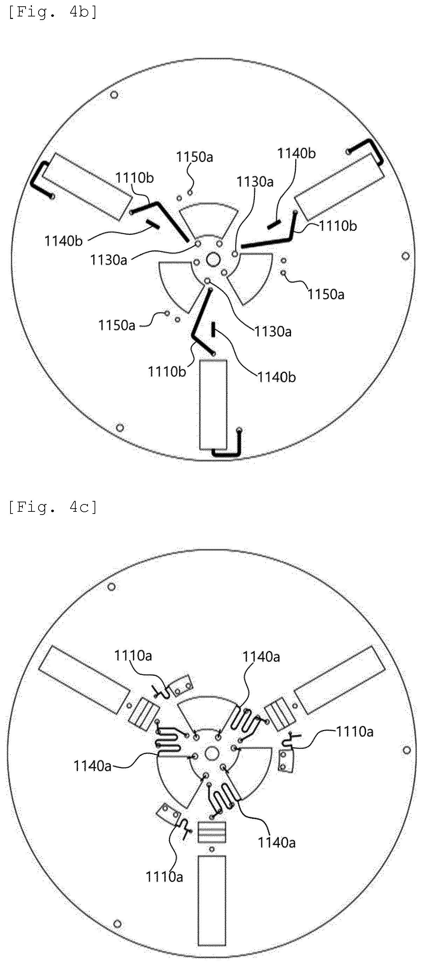

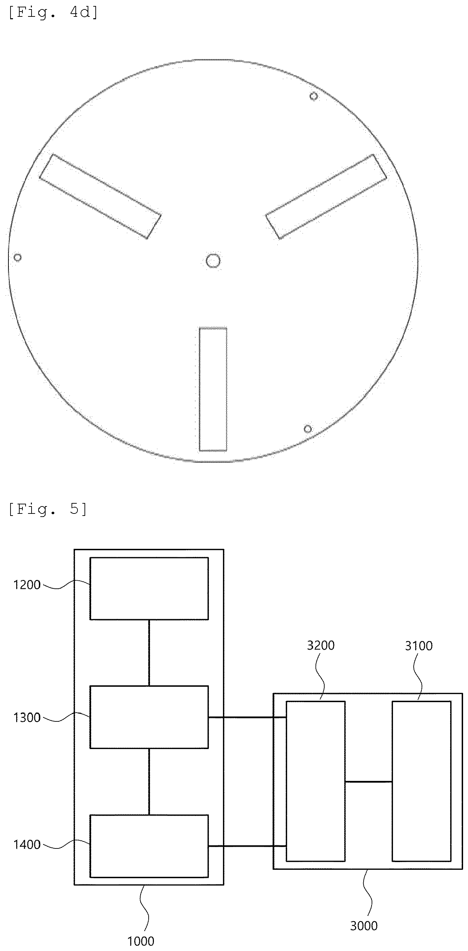

FIGS. 4a to 4d show each layer of a rotary platform 1200 comprising the microfluidic structure 1100 of FIG. 2. As shown in FIG. 4a, the rotary platform 1200 comprising the microfluidic structure 1100 can be largely composed of three layers, an upper layer portion (FIG. 4b), a middle layer portion (FIG. 4c), and a lower layer portion (FIG. 4d). Each constitutive element except for the separation unit 1120 of the microfluidic structure 1100 may be made through a patterning process using a micro milling.

First, referring to FIGS. 4a to 4c, a first part 1110a of the first microfluidic channel 1110 is disposed on the middle layer portion, and the first part 1110a includes a portion connected to the sample storage unit 1150 and a bent portion 1170. A second part 1110b of the first microfluidic channel 1110 is disposed on the upper layer portion, and the second part 1110b includes a portion connected to the separation unit 1120. According to such an arrangement, the sample is accommodated into the first part 1110a of the first microfluidic channel 1110 from the sample storage unit 1150 disposed on the middle layer portion, and then the sample falls from the top to the downward direction of the separation unit 1120, that is, onto the separation unit 1120, when the sample is supplied from the first microfluidic channel 1110 to the separation unit 1120. Therefore, the sample can be deployed on the separation unit 1120 more uniformly. If the first microfluidic channel 1110 is connected to a side surface of the separation unit 1120 to inject the sample, the sample may not be formed as a spot in the injected section, which may cause an error in interpreting the analysis results. In the micro device for detecting the aldehydes or the ketones according to the present invention, the second part 1110b connected to the separation unit 1120 of the first microfluidic channel 1110 is formed on a layer having a different height from the separation unit 1120 in the rotary platform 1200, so that the sample can be injected to the center of the separation unit 1120 from the width direction of the separation unit 1120 rather than the side surface of the separation unit 1120.

The microfluidic structure 1100 may include a waste channel 1111 that isolates a part of the sample moving from the sample storage unit 1150 to the separation unit 1120. The waste channel 1111 may be a flow path that is branched from the first microfluidic channel.

By further including the waste channel 11111, a part of the sample transferred from the sample storage unit 1150 through the first microfluidic channel 1110 can flow into the waste channel 1111 to isolate the sample as much as the volume of the receiving space inside the waste channel 1111 before the sample reaches the separation unit 1120. Therefore, the sample of an amount excluding the internal volume of the waste channel 1111 may be loaded into the sample introduction portion 1123 on the TLC plate. For example, in case the sample having a content of 5 µl is injected into the sample storage unit 1150, the volume of the waste channel 1111 is designed to be 4.5 µl so that only 0.5 ul of the derivatized sample can be adjusted to be loaded onto the TLC plate. This can prevent a phenomenon that the sample is too excessively loaded on the TLC to perform the separation properly, thereby causing erroneous results.

The DNPH-derivatized fluid sample containing the multiple aldehydes or ketones is injected to the separation unit 1120 inserted into the middle layer portion and the lower layer portion of the rotary platform 1200 from the first microfluidic channel 1110 located in the upper layer portion of the rotary platform 1200, that is, is injected to a downward direction. Thus, the fluid sample can be deployed in the separation unit 1120 more uniformly.

Further, referring to FIGS. 4a to 4c, the first part 1140a of the second microfluidic channel 1140 is disposed on the middle layer portion, and the first part 140a includes a portion connected to the eluent storage unit 1130 and the bent portion 1170. the second part 1140b of the second microfluidic channel 1140 is disposed over the upper layer portion and the middle layer portion, and the second part 140b includes a portion connected to the separation unit 1120. This arrangement is to allow the eluent to be introduced to a lower end center of the separation unit 1120. If the second microfluidic channel 1140 is connected to a side surface of the separation unit 1120 to inject the eluent, the eluent may be deployed as a wave circle without being deployed as a uniform line on the separation unit, whereby it is difficult to perform an uniform separation of the sample. In the micro device for detecting the aldehydes or the ketones according to the present invention, the second part 1140b connected to the separation unit 1120 of the second microfluidic channel 1140 is formed on a layer having a different height from the separation unit 1120 in the rotary platform 1200, so that the eluent can be injected to the center of the separation unit 1120 from the width direction of the separation unit 1120 rather than the side surface of the separation unit 1120.

Further, as shown in FIG. 4b, the upper layer portion includes an inlet 1150a of the sample storage unit 1150 and an inlet 1130a of the eluent storage unit 1130. As shown in FIGS. 4b and 4c, the inlet 1150a of the sample storage unit 1150 and the inlet 1130a of the eluent storage unit 1130 are formed over the upper layer portion and the middle layer portion. Therefore, when the sample and the eluent are injected into the inlet 1150a of the sample storage unit 1150 and the inlet 1130a of the eluent storage unit 1130 that are provided on the top (that is, the upper layer portion) of the rotary platform 1200, respectively, each of the sample and the eluent is accommodated inside the sample storage unit 1150 and the eluent storage unit 1130 provided in the middle layer portion.

Since most of the constitutive elements described above with reference to FIGS. 2 and 3 are disposed in the middle layer portion, the overlapping explanation of the constitutive elements described in FIGS. 2 and 3 with respect to the middle layer portion will be omitted.

Referring to FIGS. 4c and 4d, the rotary platform 1200 is provided with a space that corresponds to the shape of the TLC plate and can accommodate the shape of the TLC plate over the middle layer portion and the lower layer portion, and a space into which the absorption pad provided at one end of the TLC plate can be accommodated. The middle layer portion is opened to allow the TLC plate to be inserted, and the lower layer portion is provided with a concave portion that corresponds to the shape of the TLC plate and into which the TLC plate can be inserted. The TLC plate may be located over the middle layer portion and the lower layer portion. In addition, the eluent introduction portion 1121 is formed such that one end of the TLC plate can be inserted over the middle layer portion and the lower layer portion, and the absorption pad may be provided in the eluent introduction portion 1121.

A material of the upper layer portion, the middle layer portion and the lower layer portion is preferably made of a cyclic olefin copolymer (COC) that does not react with the aldehydes, and may be made of polycarbonate (PC) or polymethylmethacrylate (PMMA), and the like, depending on the sample.

Meanwhile, an adhesive layer (not shown) may be provided between the upper layer portion, the middle layer portion and the lower layer portion, so that the upper layer portion and the middle layer portion can be bonded, and the middle layer portion and the lower layer portion can be bonded. The adhesive layer may be made of, for example, an acrylic double-sided adhesive tape. The adhesive layer may be manufactured by cutting the sections corresponding to the above-described constitutive elements of each layer portion from a tape or a plate made of a material which has an adhesive component and corresponds to the size of the rotary platform 1200.

The sections corresponding to the inlet 1150a of the sample storage unit 1150 and the inlet 1130a of the eluent storage unit 1130 may be cut on the adhesive layer for bonding the upper layer portion and the middle layer portion, so that the sample and the eluent injected through the inlet 1150a of the sample storage unit 1150 and the inlet 1130a of the eluent storage unit 1130 on the upper layer portion can move to the middle layer, respectively. In addition, as shown in FIG. 4a, the sections corresponding to constitutive elements of the middle layer portion and the lower layer portion may be cut on the adhesive layer for bonding the middle layer portion and the lower layer portion.

As shown in FIG. 5, in the rotary TLC plate of the present invention, the rotating unit 1000 may further include a driving portion 1300 providing a rotating force to the rotary platform, and an encoder 1400 for measuring one or more values of a rotation angle, number of rotations, and a rotation direction of the driving portion 1300.

The driving portion 1300 may provide a driving force that rotates the rotary platform by setting a direction perpendicular to a surface of the rotary platform as a direction of the rotational axis. The driving portion 1300 may be an electric motor, specifically, may be one of a geared motor, a step motor, a servo motor, a brush motor, and a brushless motor.

The encoder 1400 may be connected to the rotational axis of the driving portion 1300 or the rotary platform to measure one or more values of the rotation angle, number of rotations, and the rotation direction of the driving portion 1300 or the rotary platform. A control unit 3000 receives a measurement value of the encoder 1400 and can control the feedback of the driving portion 1300.

The control unit 3000 may include an input portion 3100 that receives the rotation conditions of the rotary platform, and a rotation control portion 3200 that controls the driving portion 1300 based on the measured values of the encoder 1400 or the rotation conditions input to the input portion 3100.

The rotation condition may include one or more of a rotation speed, a rotation direction, a rotation time, a rotation sequence, and a shake value. The rotation speed may mean a rotation number per unit time of the rotary platform by the driving portion 1300. The rotation direction may be selected from a forward rotation and a reverse rotation. The rotation time may mean a time for maintaining a designated rotation speed. The shake value is to repeatedly perform the forward rotation and the reverse rotation of the rotary platform in a short time, and may be set from one or more values of the number of repetitions, a rotation amplitude, and a rotation period. The rotation sequence is provided in a plurality of stages, and every stages are given the rotation speed, the rotation time, the rotation direction, and the shake value. Accordingly, the rotation sequence may mean performing the given stages in a given order.

The rotation control portion 3200 receives the rotation condition from the input portion 3100 to transmits a command value as a signal to the driving portion 1300, and receives the measurement value of the encoder 1400 in real time when the driving portion 1300 is operated, and controls the feedback of the driving portion 1300.

In the rotary analysis system, if each value of the rotation conditions is input for pretreatment, reaction, separation, and detection of a sample through the input portion 3100, the driving portion 1300 is sequentially operated through the control of the rotation control portion 3200, and the entire process that finally detects components of the sample can be performed automatically.

Hereinafter, a method for detecting components of the sample using the rotary analysis system of the present invention will be described in detail. The method is not claimed in the appended claims.

The method for detecting the components of the sample using the rotary analysis system of the present invention may comprise a derivatization step for derivatizing the aldehydes or the ketones of the fluid sample in the sample storage unit 1150, a sample introduction step for moving the fluid sample from the sample storage unit 1150 to the sample introduction portion 1123 in the separation unit 1120, and a deployment step for moving the eluent from the eluent storage unit 1130 to the eluent introduction portion 1121 in the separation unit 1120, and separating and deploying the aldehydes or the ketones of the fluid sample in the deployment portion 1125 by the eluent.

The method for detecting the components of the sample using the rotary analysis system of the present invention may further comprise, after the deployment step, a drying step for drying the eluent of the deployment portion 1125, and a re-deployment step for separating and deploying the aldehydes or the ketones of the fluid sample by re-injecting the eluent into the dried deployment portion 1125.

In the derivatization step, the rotary platform 1200 may be rotated at 2500 to 5000 RPM for 2 to 20 seconds, and preferably, be rotated at 1000 RPM for 1 second. The sample can closely contacts with 2, 4-DNPH-coated silica in the form of beads by the rotation to accelerate the derivatization reaction of the aldehydes or the ketones with the DNPH. That is, during the rotation, the sample reacts with 2, 4-DNPH-coated silica in the form of beads to derivatize the aldehydes or the ketones with the DNPH. In this case, the sample and the eluent can be prevented from being moved to the separation unit 1120 during the derivatization of the aldehydes or the ketones of the sample by the bent portion 1170 formed in the first microfluidic channel and the second microfluidic channel.

In the sample introduction step, the rotary platform 1200 may be rotated at 2000 to 4000 RPM for 0.5 to 2 seconds. For example, the rotary platform 1200 in the sample introduction step may rotate at a speed of 3000 RPM for 1 second. The sample can be introduced into the sample introduction portion 1123 of the separation unit 1120 by the rotation. Since the second microfluidic channel has more bent portions 170 than the first microfluidic channel during the rotation, the sample is moved from the sample storage unit 1150 to the separation unit 1120, but the eluent can be prevented from being moved from the eluent storage unit 1130 to the separation unit 1120.

In the deployment stage, the rotary platform 1200 may be rotated at 400 to 800 RPM for 200 to 400 seconds, preferably, at 600 RPM for 300 seconds. The eluent can be moved to the eluent introduction portion 1121 of the separation unit 1120 by the rotation. During the rotation of the rotary platform 1200, the eluent can be absorbed primarily to the absorption pad accommodated in the eluent introduction portion 1121, and then uniformly discharged at a constant speed to the deployment portion 1125 through the sample introduction portion 1123. The rotation speed in the deployment step can be controlled to adjust the deployment speed of the eluent on the TLC plate.

In the drying step, the rotary platform 1200 may be rotated at 3000 to 5000 RPM for 5 to 6 minutes, for example, at 2000 RPM for 300 seconds. An external gas is introduced into the separation unit 1120 through the first air circulation channel 1161 or the second air circulation channel 1163 by the rotation, and the gas introduced into the separation unit 1120 is discharged through the first air circulation channel 1161 or the second air circulation channel 1163 again so that the eluent of the TLC plate can be evaporated.

In the re-deployment step, the rotary platform 1200 may be rotated at 400 to 800 RPM for 200 to 400 seconds, for example, at 600 RPM for 300 seconds. In the re-deployment step, the absorption pad may discharge the eluent to the deployment portion 1125 again. The rotation speed in the re-deployment step can be controlled to adjust the deployment speed of the eluent on the TLC plate.

The drying step and the re-deployment step may be repeatedly performed, and a resolution of the aldehydes or the ketones separated and deployed on the TLC plate can be enhanced by repeating the drying step and the re-deployment step.

Each rotation condition of the derivatization step, the sample introduction step, the deployment step, the drying step, and the re-deployment step in the method for detecting the components of the sample using the rotary analysis system of the present invention can be input through the input portion 3100, and the rotation control portion 3200 may receive the rotation condition and perform the detection experiment automatically.

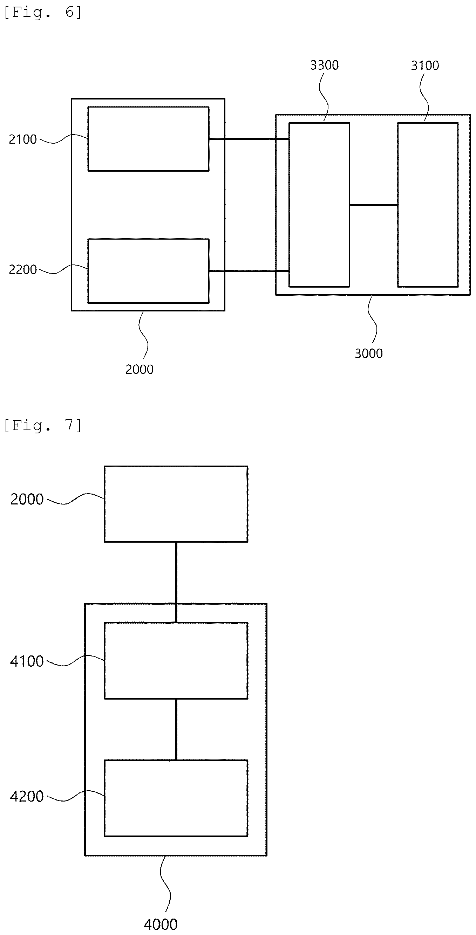

As illustrated in FIG. 6, the shooting unit 2000 includes an illumination portion 2200 for irradiating light to the rotary platform and a camera portion 2100 for capturing the image in the rotary platform, and the control unit 3000 may include an input portion 3100 for receiving a capturing condition of the shooting unit 2000, and a shooting control portion 3300 for controlling the illumination portion 2200 or the camera portion 2100 based on the capturing condition.

The illumination portion 2200 may be provided on the top of the rotary platform. The illumination portion 2200 may be one or more selected from a UV lamp and a white light (visible light) lamp. The band of the light wavelength emitted from the illumination portion 2200 may be selected depending on a color of the derivative. When UV light is used as illumination, capturing of most derivatives is excellent, but since the derivatives contained in the sample may be colored in different colors, the illumination portion 2200 may be irradiated with mixed light.

The illumination portion 2200 irradiates light to the TLC plate from the top of the rotary platform, so that the camera portion 2100 can secure an amount of light for capturing the TLC plate.

The camera portion 2100 may be provided on the top of the rotary platform. The camera portion 2100 may include an image sensor and a lens. Light received by the image sensor through the lens may be produced as a captured image. The camera portion 2100 may capture the TLC plate according to the capturing conditions from the top of the rotary platform. The capturing condition may include one or more of amplification, exposure, and capturing area values.

The amplification may be a value related to a sensitivity of the image sensor to recognize light entering through the lens. The exposure may be a value related to an amount of light received by the camera portion 2100. The capturing area may be to select an area of the TLC plate to be analyzed. In the rotary analysis system of the present invention, an experiment is simultaneously performed with a plurality of TLC plates, and the capturing area may be to select a TLC plate to be captured among the plurality of TLC plates.

The shooting control portion 3300 may receive the capturing conditions through the input portion 3100 and capture the TLC plate on the rotary platform 1200 according to the capturing conditions.

As shown in FIG. 7, the analysis unit 4000 may include an image conversion unit 4100 for converting the image captured by the shooting unit 2000 to a converted image and a chromatogram generation unit 4200 for producing a chromatogram with the image converted by the image conversion unit 4100.

The image conversion unit 4100 may adjust one or more values of hue, saturation, and brightness of the captured image to distinguish differences in expression colors. Specifically, the image conversion unit may convert the captured image into a converted image through HSV (Hue/Saturation/Value) conversion.

It is difficult to implement gradients that gradually change colors using RGB, but using this HSV can easily express shading change and saturation change by fixing two parameters and moving only one parameter. That is, it is possible to perform colorimetric analysis of the image for the section of the TLC plate by the HSV conversion.

The chromatogram generation unit 4200 may calculate one or more values of a type of sample components, a content of each component, and a retention factor value of each component.

The chromatogram generation unit 4200 may perform plotting by extracting elements of a specific color from the converted image, and produce the chromatograms through intensity extraction.

Qualitative and quantitative analysis of certain components can be performed through a partial integration process.

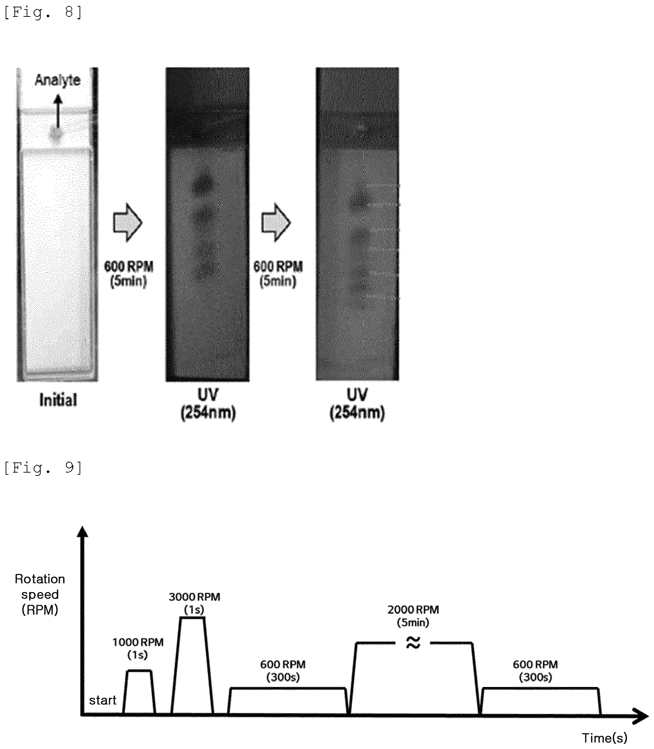

FIG. 8 is photographs showing a TLC plate in which the aldehydes or the ketones are separated and deployed after the derivatization step, the sample introduction step, and the deployment step were performed, and a TLC plate in which the aldehydes or the ketones are separated and deployed after the drying step and re-deployment step were performed after the deployment step. The TLC plate performed up to the derivatization step, the sample introduction step, and the deployment step is the middle TLC plate in the photographs of FIG. 4. The TLC plate in which the drying step and the re-deployment step were further performed after the deployment step is the right TLC plate in the photographs of FIG. 8. Comparing the two TLC plates, it can be seen that the TLC plate in which the drying step and the re-deployment step were further performed after the deployment step has better resolution.

FIG. 9 is a graph showing a rotation speed and a rotation time of the rotary platform 1200 while the derivatization step, the sample introduction step, the deployment step, the drying step, and re-deployment step are performed.

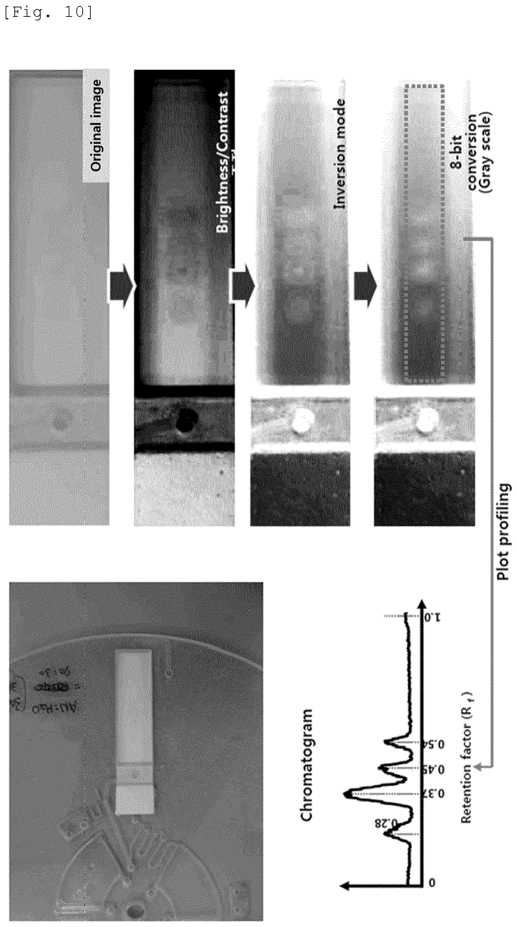

FIG. 10 is photographs showing the process that converts a captured image from the analysis unit 4000 into a converted image through HVS conversion, performs plotting by extracting elements of a certain color from the converted image, and produces a chromatogram through intensity extraction.

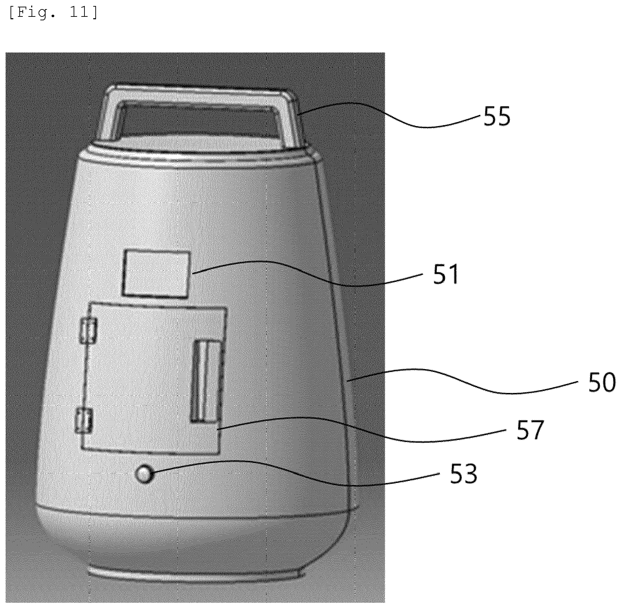

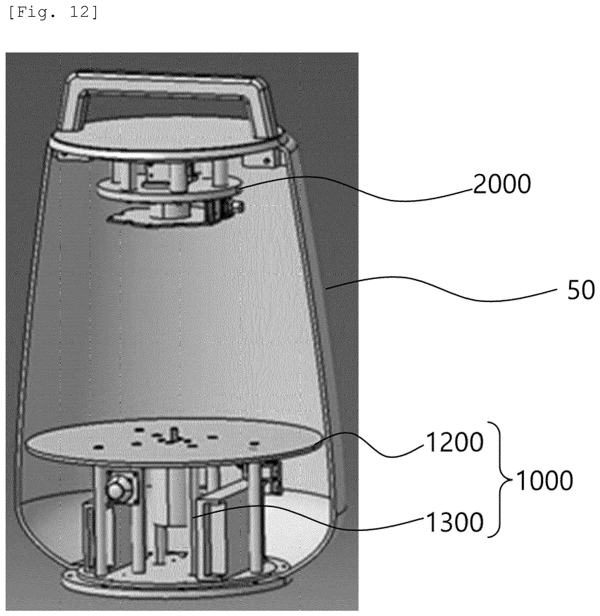

FIGS. 11 and 12 are perspective views showing an exterior and the inside of the rotary analysis system of the present invention.

As shown in FIG. 11, the rotary analysis system of the present invention may include a housing 50 that accommodates the rotating unit 1000 and the shooting unit 2000 therein. A material of the housing may include polyurethane having excellent shock absorption.

A side surface of the housing 50 may be provided with a door 57 that opens and closes to put the sample or the eluent into the microfluidic structure 1100 inside the housing 50. An outer wall of the housing 50 may be provided with a display 51 for visualizing and outputting operating information, experimental result information, and the like of the rotary analysis system of the present invention, and a button 53 for operating the rotary analysis system of the present invention. A handle may be provided at an upper end of the housing 50 to facilitate carrying the device.

A size of the housing 50 may be 20 cm to 60 cm in width, 20 cm to 60 cm in length, and 30 cm to 90 cm in height. For example, the housing 50 may be made of 40 cm wide, 40 cm length, and 60 cm height. The standard may be made considering a size of the rotary platform 1200 provided inside the housing 50 and a convenience of portability.

As shown in FIG. 12, the shooting unit 2000 and the rotating unit 1000 may be provided inside the housing 50. The shooting unit 2000 may be disposed on the top of the rotating unit 1000 in the housing 50. That is, the shooting unit 2000 may be disposed opposite to an upper surface of the rotary platform 1200 so that the upper surface of the rotary platform 1200 can be captured. The driving portion 1300 is provided beneath the rotary platform 1200, and the driving portion 1300 may transfer a rotational power to the rotary platform 1200 beneath the rotary platform 1200.

As such, the qualitative analysis of a plurality of aldehydes or ketones such as acetaldehyde, acetone, acrolein, benzaldehyde, butyraldehyde, formaldehyde, or propionaldehyde can be performed within few minutes using the rotary analysis system according to the present invention. Since the seven types of aldehydes or ketones contained in the fluid sample have different degrees of deployment on the separation unit 1120, respectively, the seven types of aldehydes or ketones separated and deployed on the separation unit 1120 can be detected, respectively, by irradiating the UV lamp to the separation unit 1120.

According to the present invention, the derivatization of the aldehydes or the ketones with the DNPH and the deployment process on the separation unit 1120 are attained through the control of the centrifugal force and the capillary force by controlling rotation of the rotary platform 1200 on which the microfluidic structure 1100 is disposed.

Further, the rotary analysis system according to an embodiment of the present invention makes possible that multiple aldehydes or ketones are separated and detected economically and quickly, and is economical and can shorten the time required for analysis, compared to the conventional expensive HPLC analysis equipment. Further, the rotary analysis system can be quickly and conveniently applied in the field where separation and detection of the multiple aldehydes or ketones are required. Moreover, when a plurality of samples are present and these samples contain aldehydes or ketones having different compositions, respectively, the plurality of samples can be analyzed in one apparatus at the same time.

It will be understood by those skilled in the art to which the present invention pertains that the above-described technical constitutions of the present invention can be implemented in other specific forms without changing the technical idea or essential features of the present invention.

The scope of the invention is indicated by the claims below, rather than the detailed description above.

### INDUSTRIAL APPLICABILITY

According to the present invention, it is possible to provide a compact rotary analysis system that can be conveniently applied in the field while being capable of separating and detecting color-based aldehydes or ketones economically and inexpensively, compared to the expensive HPLC which is the conventional equipment for analyzing the aldehydes or the ketones.

In particular, the analysis system of the present invention can automate the entire process consisting of movement, chemical reaction and separation of a microfluid by mounting a TLC plate on a rotary platform and then controlling rotation of the rotary platform through a control unit.

Further, according to the analysis system of the present invention, all of the rotation steps can be programmed, and a mixing effect of the fluid can be enhanced by controlling a rotational direction of the rotary platform.

Further, according to the analysis system of the present invention, both organic and inorganic materials can be analyzed by modifying a microfluidic structure provided on the rotary platform, and all the processes consisting of pretreatment, reaction, separation and detection of the sample can be carried out sequentially.

Further, after all the experimental processes performed in the rotary analysis system of the present invention are terminated, an image-based analysis may be performed with a captured image by capturing the TLC plate of the rotary platform through a camera portion. A HSV algorithm transformation enables colorimetric analysis of images for sections of the TLC plate on the rotary platform. A plotting may be performed by extracting an element of a specific color, and qualitative and quantitative analysis of specific components may be performed through a partial integration process.

Further, in the device for detecting the aldehydes or the ketones according to the present invention, when a eluent is deployed on the TLC, a capillary force as well as a centrifugal force acts as a propulsive force of the eluent, so that a solvent can be deployed on the TLC uniformly.

Further, in the device for detecting the aldehydes or the ketones according to the present invention, a derivatization reaction process for converting the aldehydes or the ketones into the form that can be analyzed on the TLC, and a separation process for separating the derivatized compound on the TLC can be performed in one device integrally. That is, the device for detecting the aldehydes or the ketones according to the present invention may be the rotary micro device that can integrate the derivatization of the aldehydes or the ketones and the TLC separation.

Further, a plurality of microfluidic structures provided in the analysis system of the present invention include a sample storage unit capable of derivatizing the aldehyde or ketone samples and a separation unit, respectively, so that the derivatization and the separation of the aldehydes or the ketones can be performed integrally, and derivative materials of the aldehydes or the ketones separated from the separation unit can be qualitatively or quantitatively analyzed through an image analysis.

Further, the present invention has an advantage that a plurality of samples containing the aldehydes or the ketones can be separated and detected simply and quickly at the same time.

Further, in the analysis system of the present invention, the eluent can be moved at a constant speed as the eluent is first absorbed to a absorption pad provided in the separation unit and then discharged. That is, the absorption pad provided in the separation unit can allow the sample to be stably separated in the separation unit by preventing diffusion due to the wettability of the eluent, which is caused when the eluent is injected into the separation unit in the moving phase by a rotating force, and by moving the eluent at a constant speed.

Further, the analysis system of the present invention can control a moving speed of the solvent onto the TCL by adjusting a strength of the rotating force, and can improve a resolution of the TLC by drying the solvent remaining on the TLC by rotation after the sample is separated once and repeating inflow of the eluent and the TLC separation by applying the rotating force again.

## Claims

1. A rotary analysis system comprising:
a rotating unit (1000) including a rotary platform (1200), and having a TLC plate on which movement of a fluid sample and an eluent is controlled on the rotary platform (1200) by rotational motion of the rotary platform (1200) and aldehydes or ketones of the sample are separated and deployed with the eluent;
a shooting unit (2000) for capturing an image of components of the sample separated in the rotating unit (1000);
a control unit (3000) for controlling rotation condition of the rotating unit (1000) and capturing condition of the shooting unit (2000); and
an analysis unit (4000) for analyzing the image captured by the shooting unit (2000),
wherein the rotating unit (1000) comprises the rotary platform (1200) of a disk shape; and a microfluidic structure (1100) disposed on the rotary platform (1200),
wherein the microfluidic structure (1100) includes:
a sample storage unit (1150) into which the fluid sample containing the aldehydes or the ketones is injected to derivatize the aldehydes or the ketones;
an eluent storage unit (1130) into which the eluent is injected;
a separation unit (1120) having the TLC plate that receives the sample and the eluent from the sample storage unit (1150) and the eluent storage unit (1130), and separates and deploys the aldehydes or the ketones of the sample with the eluent;
a first microfluidic channel (siphon channel) (1110) that is a passage through which the sample moves to the separation unit (1120), and connects the sample storage unit (1150) and the separation unit (1120),
a second microfluidic channel (1140) that is a passage through which the eluent moves to the separation unit (1120), and connects the eluent storage unit (1130) and the separation unit (1120), the rotary analysis system **characterized in that** the microfluidic structure (1100)includes
an absorption pad that receives the eluent from the eluent storage unit (1130) and discharges it to the TLC plate,
and further **characterized in that** the separation unit (1120) includes:
a sample introduction portion (1123) for receiving the sample from the sample storage unit (1150);
an eluent introduction portion (1121) for receiving the eluent from the eluent storage unit (1130); and
a deployment portion (1125) in which the aldehydes or the ketones of the sample are separated and deployed with the eluent, and
wherein the absorption pad is provided in the eluent introduction portion (1121).

2. The rotary analysis system according to claim 1,
wherein the first microfluidic channel (1110) and the second microfluidic channel (1140) include a number of bent portions (1170), respectively, and
the number of the bent portions (1170) of the second microfluidic channel (1140) is more than the number of bent portions (1170) of the first microfluidic channel (1110).

3. The rotary analysis system according to claim 1,
wherein the absorption pad is disposed in an overlapped state with the TLC plate;
wherein the adsorption pad is provided at one end of the TLC plate; and
wherein an area of the absorption pad occupies a range of 5 to 10% in an area of the separation unit (1120), wherein the width of the adsorption pad is equal to or greater than a width of the TLC plate.

4. The rotary analysis system according to claim 1,
wherein the center of rotation of the rotary platform (1200) is the center of the rotary platform (1200),
wherein a longitudinal direction of the separation unit (1120) is a radial direction of the rotary platform (1200), and
wherein the deployment portion (1125), the sample introduction portion (1123), and the eluent introduction portion (1121) are disposed in the order of the deployment portion (1125), the sample introduction portion (1123), and the eluent introduction portion (1121) from the longitudinal direction of the separation unit (1120).

5. The rotary analysis system according to claim 4,
wherein the rotary platform (1200) rotates in a direction perpendicular to a surface of the rotary platform (1200) as a direction of the rotational axis,
wherein the TLC plate on which the eluent is deployed by a capillary force is disposed across the deployment portion (1125) and the eluent introduction portion (1121) in the separation unit (1120) such that a longitudinal direction of the TLC plate becomes a direction of a centrifugal force generated by rotation,
wherein the eluent is discharged from the eluent introduction portion (1121) to the deployment portion (1125), and is propelled in the deployment portion (1125) by a combined force of the capillary force and the centrifugal force.

6. The rotary analysis system according to claim 1,
wherein the microfluidic structure (1100) further includes a waste channel (1111) for isolating a part of the sample moving from the sample storage unit (1150) to the separation unit (1120), and
wherein the waste channel (1111) is a channel branched from the first microfluidic channel (1110).

7. The rotary analysis system according to claim 1,
wherein the rotating unit (1000) includes a driving portion (1300) for providing a rotating force to the rotary platform (1200) and an encoder (1400) for measuring one or more values of a rotation angle, a number of rotations, and a rotation direction of the driving portion (1300), and
wherein the control unit (3000) includes an input portion (3100) for receiving a condition value of rotation and a rotation control portion (3200) for controlling the driving portion (1300) based on the measured value of the encoder (1400) or the condition value of rotation input to the input portion (3100).

8. The rotary analysis system according to claim 7,
wherein the condition value of rotation includes one or more values of rotation speed, rotation direction, rotation time, rotation sequence, and shake value.

9. The rotary analysis system according to claim 1,
wherein the shooting unit (2000) includes an illumination portion (2200) for irradiating light to the rotary platform (1200) and a camera portion (2100) for capturing the image in the rotary platform (1200), and
wherein the control unit (3000) includes an input portion (3100) for inputting a capturing condition of the shooting unit (2000) and a shooting control portion (3300) for controlling the illumination portion (2200) or the camera portion (2100) based on the capturing condition.

10. The rotary analysis system according to claim 9,
wherein the capturing condition includes one or more of amplification, exposure, and capturing area values.

11. The rotary analysis system according to claim 1,
wherein the analysis unit (4000) includes an image conversion unit (4100) for converting the image captured by the shooting unit (2000) to a converted image and a chromatogram generation unit (4200) for generating a chromatogram from the image converted by the image conversion unit (4100).

12. The rotary analysis system according to claim 11,
wherein the image conversion unit (4100) adjusts one or more of hue, saturation, and brightness of the captured image in order to differentiate differences in an expression color.

13. The rotary analysis system according to claim 12,
wherein the image conversion unit (4100) converts the captured image into the converted image through HSV (Hue/Saturation/Value) conversion.

14. The rotary analysis system according to claim 11,
wherein the image conversion unit (4100) converts the captured image into the converted image through RGB (Red-Green-Blue) conversion.

15. The rotary analysis system according to claim 1,
wherein the chromatogram generation unit (4200) calculates one or more of a type of sample components, a content of each component, and a retention factor value of each component.

## Patentansprüche

1. Rotationsanalysesystem aufweisend:
eine Dreheinheit (1000), die eine Drehplattform (1200) aufweist und eine TLC-Platte aufweist, auf welcher die Bewegung einer Fluidprobe und eines Elutionsmittels auf der Drehplattform (1200) durch Drehbewegung der Drehplattform (1200) gesteuert wird und Aldehyde oder Ketone der Probe getrennt und mit dem Elutionsmittel geleitet werden;
eine Aufnahmeeinheit (2000) zum Aufnehmen eines Bilds von Komponenten der Probe, die in der Dreheinheit (1000) getrennt werden;
eine Steuereinheit (3000) zum Steuern des Drehzustands der Dreheinheit (1000) und des Aufnahmezustands der Aufnahmeeinheit (2000); und
eine Analyseeinheit (4000) zum Analysieren des von der Aufnahmeeinheit (2000) aufgenommenen Bilds,
wobei die Dreheinheit (1000) die Drehplattform (1200) in Scheibenform und eine mikrofluidische Struktur (1100) aufweist, die auf der Drehplattform (1200) angeordnet ist,
wobei die mikrofluidische Struktur (1100) aufweist:
eine Probenspeichereinheit (1150), in welche die Fluidprobe, die die Aldehyde oder die Ketone enthält, injiziert wird, um die Aldehyde oder die Ketone zu derivatisieren;
eine Elutionsmittelspeichereinheit (1130), in welche das Elutionsmittel injiziert wird;
eine Trenneinheit (1120), die die TLC-Platte aufweist, welche die Probe und das Elutionsmittel von der Probenspeichereinheit (1150) und der Elutionsmittelspeichereinheit (1130) aufnimmt und die Aldehyde oder die Ketone der Probe mit dem Elutionsmittel trennt und leitet;
einen ersten mikrofluidischen Kanal (Siphonkanal) (1110), der ein Durchgang ist, durch welchen sich die Probe zu der Trenneinheit (1120) bewegt, und der die Probenspeichereinheit (1150) und die Trenneinheit (1120) verbindet,
einen zweiten mikrofluidischen Kanal (1140), der ein Durchgang ist, durch welchen sich das Elutionsmittel zu der Trenneinheit (1120) bewegt, und der die Elutionsmittelspeichereinheit (1130) und die Trenneinheit (1120) verbindet, wobei das Rotationsanalysesystem **dadurch gekennzeichnet ist, dass** die mikrofluidische Struktur (100) aufweist:
ein Absorptionspad, das das Elutionsmittel aus der Elutionsmittelspeichereinheit (1130) aufnimmt und es an die TLC-Platte abgibt,
und gekennzeichnet ferner dadurch, dass
die Trenneinheit (1120) aufweist:
einen Probeneinführungsabschnitt (1123) zum Aufnehmen der Probe aus der Probenspeichereinheit (1150);
einen Elutionsmitteleinführungsabschnitt (1121) zum Aufnehmen des Elutionsmittels aus der Elutionsmittelspeichereinheit (1130); und
einen Leitabschnitt (1125), in welchem die Aldehyde oder die Ketone der Probe getrennt und mit dem Elutionsmittel geleitet werden, und
wobei das Absorptionspad in dem Elutionsmitteleinführungsabschnitt (1121) bereitgestellt ist.

2. Rotationsanalysesystem nach Anspruch 1,
wobei der erste mikrofluidische Kanal (1110) und der zweite mikrofluidische Kanal (1140) eine jeweilge Anzahl von gebogenen Abschnitten (1170) aufweisen, und
die Anzahl der gebogenen Abschnitte (1170) des zweiten mikrofluidischen Kanals (1140) größer ist als die Anzahl der gebogenen Abschnitte (1170) des ersten mikrofluidischen Kanals (1110).

3. Rotationsanalysesystem nach Anspruch 1,
wobei das Absorptionspad in einem mit der TLC-Platte überlappten Zustand angeordnet ist;
wobei das Adsorptionspad an einem Ende der TLC-Platte bereitgestellt ist; und
wobei eine Fläche des Absorptionspads 5 bis 10 % in einer Fläche der Trenneinheit (1120) einnimmt, wobei die Breite des Adsorptionspads gleich oder größer als eine Breite der TLC-Platte ist.

4. Rotationsanalysesystem nach Anspruch 1,
wobei der Drehmittelpunkt der Drehplattform (1200) der Mittelpunkt der Drehplattform (1200) ist,
wobei eine Längsrichtung der Trenneinheit (1120) eine Radialrichtung der Drehplattform (1200) ist, und
wobei der Leitabschnitt (1125), der Probeneinführungsabschnitt (1123) und der Elutionsmitteleinführungsabschnitt (1121) in der Reihenfolge des Leitabschnitts (1125), des Probeneinführungsabschnitts (1123) und des Elutionsmitteleinführungsabschnitts (1121) von der Längsrichtung der Trenneinheit (1120) angeordnet sind.

5. Rotationsanalysesystem nach Anspruch 4,
wobei sich die Drehplattform (1200) in einer Richtung senkrecht zu einer Oberfläche der Drehplattform (1200) als Drehachsenrichtung dreht,
wobei die TLC-Platte, auf die das Elutionsmittel durch eine Kapillarkraft geleitet wird, über den Leitabschnitt (1125) und den Elutionsmitteleinführungsabschnitt (1121) in der Trenneinheit (1120) angeordnet ist, so dass eine Längsrichtung der TLC-Platte eine Richtung einer durch Drehung erzeugten Zentrifugalkraft wird,
wobei das Elutionsmittel aus dem Elutionsmitteleinführungsabschnitt (1121) an den Leitabschnitt (1125) abgegeben wird und in dem Leitabschnitt (1125) durch eine kombinierte Kraft der Kapillarkraft und der Zentrifugalkraft angetrieben wird.

6. Rotationsanalysesystem nach Anspruch 1,
wobei die mikrofluidische Struktur (1100) ferner einen Abfallkanal (1111) zum Isolieren eines Teils der Probe aufweist, der sich von der Probenspeichereinheit (1150) zu der Trenneinheit (1120) bewegt, und
wobei der Abfallkanal (1111) ein Kanal ist, der von dem ersten mikrofluidischen Kanal (1110) abzweigt ist.

7. Rotationsanalysesystem nach Anspruch 1,
wobei die Dreheinheit (1000) einen Antriebsabschnitt (1300) zum Bereitstellen einer Drehkraft an die Drehplattform (1200) und einen Encoder (1400) zum Messen eines oder mehrerer Werte eines Drehwinkels, einer Anzahl von Drehungen und einer Drehrichtung des Antriebsabschnitts (1300) aufweist, und
wobei die Steuereinheit (3000) einen Eingabeabschnitt (3100) zum Empfangen eines Zustandswerts der Drehung und einen Drehungssteuerabschnitt (3200) zum Steuern des Antriebsabschnitts (1300) basierend auf dem gemessenen Wert des Encoders (1400) oder dem Zustandswert der Drehung, der in den Eingabeabschnitt (3100) eingegeben wird, aufweist.

8. Rotationsanalysesystem nach Anspruch 7,
wobei der Zustandswert der Drehung einen oder mehrere Werte von Drehzahl, Drehrichtung, Drehzeit, Drehsequenz und Schüttelwert aufweist.

9. Rotationsanalysesystem nach Anspruch 1,
wobei die Aufnahmeeinheit (2000) einen Beleuchtungsabschnitt (2200) zum Bestrahlen der Drehplattform (1200) mit Licht und einen Kameraabschnitt (2100) zum Aufnehmen des Bilds in der Drehplattform (1200) aufweist, und
wobei die Steuereinheit (3000) einen Eingabeabschnitt (3100) zum Eingeben eines Aufnahmezustands der Aufnahmeeinheit (2000) und einen Aufnahmesteuerabschnitt (3300) zum Steuern des Beleuchtungsabschnitts (2200) oder des Kameraabschnitts (2100) basierend auf dem Aufnahmezustand aufweist.

10. Rotationsanalysesystem nach Anspruch 9,
wobei der Aufnahmezustand einen oder mehrere von Folgenden aufweist: Verstärkungswert, Belichtungswert und Aufnahmeflächenwert.

11. Rotationsanalysesystem nach Anspruch 1,
wobei die Analyseeinheit (4000) eine Bildkonvertierungseinheit (4100) zum Konvertieren des von der Aufnahmeeinheit (2000) aufgenommenen Bilds in ein konvertiertes Bild und eine Chromatogrammerzeugungseinheit (4200) zum Erzeugen eines Chromatogramms aus dem von der Bildkonvertierungseinheit (4100) konvertierten Bild aufweist.

12. Rotationsanalysesystem nach Anspruch 11,
wobei die Bildkonvertierungseinheit (4100) einen oder mehrere von Folgenden einstellt: Farbton, Sättigung und Helligkeit des aufgenommenen Bilds, um Unterschiede in einer Ausdrucksfarbe zu unterscheiden.

13. Rotationsanalysesystem nach Anspruch 12,
wobei die Bildkonvertierungseinheit (4100) das aufgenommene Bild durch HSV-Konvertierug (Farbton/Sättigung/Wert) in das konvertierte Bild konvertiert.

14. Rotationsanalysesystem nach Anspruch 11,
wobei die Bildkonvertierungseinheit (4100) das aufgenommene Bild durch RGB-Konvertierug (Rot-Grün-Blau) in das konvertierte Bild konvertiert.

15. Rotationsanalysesystem nach Anspruch 1,
wobei die Chromatogrammerzeugungseinheit (4200) eine oder mehrere von den Folgenden berechnet: eine Art von Probenkomponenten, ein Gehalt jeder Komponente und ein Retentionsfaktorwert jeder Komponente.

## Revendications

1. Système d'analyse rotatif comprenant :
une unité rotative (1000) dotée d'une plateforme rotative (1200) et comportant une plaque de chomatographie en couche mince (CCM) sur laquelle le mouvement d'un échantillon de fluide et d'un éluant est contrôlé sur la plateforme rotative (1200) par un mouvement de rotation de la plateforme rotative (1200) et sur laquelle les aldéhydes ou les cétones de l'échantillon sont séparés et déployés avec l'éluant ;
une unité de prise de vue (2000) pour saisir une image des composants de l'échantillon séparés dans l'unité rotative (1000) ;
une unité de commande (3000) pour contrôler les conditions de rotation de l'unité rotative (1000) et les conditions de saisie de l'unité de prise de vue (2000) ; et
une unité d'analyse (4000) pour analyser l'image saisie par l'unité de prise de vue (2000),
dans lequel l'unité rotative (1000) est dotée de la plateforme rotative (1200) en forme de disque ; et une structure microfluidique (1100) est disposée sur la plateforme rotative (1200),
dans lequel la structure microfluidique (1100) comporte :
une unité de stockage d'échantillons (1150) dans laquelle l'échantillon de fluide contenant les aldéhydes ou les cétones est injecté pour dérivatiser les aldéhydes ou les cétones ;
une unité de stockage d'éluants (1130) dans laquelle l'éluant est injecté ;
une unité de séparation (1120) dotée de la plaque CCM qui reçoit l'échantillon et l'éluant de l'unité de stockage d'échantillons (1150) et de l'unité de stockage d'éluants (1130) et qui sépare et déploie les aldéhydes ou les cétones de l'échantillon avec l'éluant ;
un premier canal microfluidique (canal siphon) (1110) qui est un passage à travers lequel l'échantillon se déplace vers l'unité de séparation (1120), et qui relie l'unité de stockage d'échantillons (1150) et l'unité de séparation (1120),
un deuxième canal microfluidique (1140) qui est un passage à travers lequel l'éluant se déplace vers l'unité de séparation (1120), et qui relie l'unité de stockage d'éluents (1130) et l'unité de séparation (1120), le système d'analyse rotatif étant **caractérisé en ce que** la structure microfluidique (1100) comporte
un tampon d'absorption qui reçoit l'éluant de l'unité de stockage d'éluants (1130) et qui le décharge sur la plaque CCM,
et **caractérisé en outre en ce que** l'unité de séparation (1120) comporte :
une partie d'introduction de l'échantillon (1123) pour recevoir l'échantillon de l'unité de stockage d'échantillons (1150) ;
une partie d'introduction de l'éluant (1121) pour recevoir l'éluant de l'unité de stockage d'éluants (1130) ; et
une partie de déploiement (1125) dans laquelle les aldéhydes ou les cétones de l'échantillon sont séparés et déployés avec l'éluant, et
dans laquelle le tampon d'absorption est fourni dans la partie d'introduction de l'éluant (1121).

2. Système d'analyse rotatif selon la revendication 1,
dans lequel le premier canal microfluidique (1110) et le deuxième canal microfluidique (1140) comportent un certain nombre de parties coudées (1170), respectivement, et
le nombre de parties coudées (1170) du deuxième canal microfluidique (1140) est supérieur au nombre de parties coudées (1170) du premier canal microfluidique (1110).

3. Système d'analyse rotatif selon la revendication 1,
dans lequel le tampon d'absorption est disposé dans un état de chevauchement avec la plaque CCM ;
dans lequel le tampon d'adsorption est procuré à une extrémité de la plaque CCM ; et
dans lequel une zone du tampon d'absorption occupe une plage de 5 à 10% dans une zone de l'unité de séparation (1120), dans laquelle la largeur du tampon d'adsorption est égale ou supérieure à une largeur de la plaque CCM.

4. Système d'analyse rotatif selon la revendication 1,
dans lequel le centre de rotation de la plateforme rotative (1200) est le centre de la plateforme rotative (1200),
dans lequel une direction longitudinale de l'unité de séparation (1120) est une direction radiale de la plateforme rotative (1200),
et dans lequel la partie de déploiement (1125), la partie d'introduction de l'échantillon (1123) et la partie d'introduction de l'éluant (1121) sont disposées dans l'ordre de la partie de déploiement (1125), de la partie d'introduction de l'échantillon (1123) et de la partie d'introduction de l'éluant (1121) à partir de la direction longitudinale de l'unité de séparation (1120).

5. Système d'analyse rotatif selon la revendication 4,
dans lequel la plateforme rotative (1200) tourne dans une direction perpendiculaire à une surface de la plateforme rotative (1200) en tant que direction de l'axe de rotation,
dans lequel la plaque CCM sur laquelle l'éluant est déployé par une force capillaire est disposé à travers la partie de déploiement (1125) et la partie d'introduction de l'éluant (1121) dans l'unité de séparation (1120) de telle sorte qu'une direction longitudinale de la plaque CCM devient la direction d'une force centrifuge générée par la rotation,
dans lequel l'éluant est déchargé de la partie d'introduction de l'éluant (1121) vers la partie de déploiement (1125), et est propulsé dans la partie de déploiement (1125) par une force combinée constituée de la force capillaire et de la force centrifuge.

6. Système d'analyse rotatif selon la revendication 1,
dans lequel la structure microfluidique (1100) comporte en outre un canal de déchets (1111) pour isoler une partie de l'échantillon passant de l'unité de stockage d'échantillons (1150) à l'unité de séparation (1120), et
dans lequel le canal de déchets (1111) est un canal ramifié à partir du premier canal microfluidique (1110).

7. Système d'analyse rotatif selon la revendication 1,
dans lequel l'unité rotative (1000) comporte une partie motrice (1300) pour fournir une force rotative à la plateforme rotative (1200) et un encodeur (1400) pour mesurer une ou plusieurs valeurs d'un angle de rotation, un nombre de rotations et une direction de rotation de la partie motrice (1300), et
dans lequel l'unité de commande (3000) comporte une partie d'entrée (3100) pour recevoir une valeur de condition de rotation et une partie de commande de rotation (3200) pour commander la partie motrice (1300) sur la base de la valeur mesurée de l'encodeur (1400) ou de la valeur de condition de rotation entrée dans la partie d'entrée (3100).

8. Système d'analyse rotatif selon la revendication 7,
dans lequel la valeur de condition de rotation comporte une ou plusieurs valeurs de vitesse de rotation, de direction de rotation, de temps de rotation, de séquence de rotation et de valeur de secousse.

9. Système d'analyse rotatif selon la revendication 1,
dans lequel l'unité de prise de vue (2000) comporte une partie d'éclairage (2200) pour irradier de la lumière sur la plateforme rotative (1200) et une partie de caméra (2100) pour saisir l'image dans la plateforme rotative (1200), et
dans lequel l'unité de commande (3000) comporte une partie d'entrée (3100) pour entrer une condition de saisie de l'unité de prise de vue (2000) et une partie de contrôle de prise de vue (3300) pour contrôler la partie d'éclairage (2200) ou la partie de caméra (2100) sur la base de la condition de saisie.

10. Système d'analyse rotatif selon la revendication 9,
dans lequel la condition de saisie comporte une ou plusieurs valeurs d'amplification, d'exposition et de saisie de zones.

11. Système d'analyse rotatif selon la revendication 1,
dans lequel l'unité d'analyse (4000) comporte une unité de conversion d'images (4100) pour convertir l'image saisie par l'unité de prise de vue (2000) en une image convertie et une unité de génération de chromatogrammes (4200) pour générer un chromatogramme à partir de l'image convertie par l'unité de conversion d'images (4100).

12. Système d'analyse rotatif selon la revendication 11,
dans lequel l'unité de conversion d'images (4100) ajuste une ou plusieurs teintes, saturations et luminosités de l'image saisie afin de différencier les différences présentes dans une couleur d'expression.

13. Système d'analyse rotatif selon la revendication 12,
dans lequel l'unité de conversion d'images (4100) convertit l'image saisie en l'image convertie par conversion TSV (teinte/saturation/valeur).

14. Système d'analyse rotatif selon la revendication 11,
dans lequel l'unité de conversion d'images (4100) convertit l'image saisie en une image convertie par conversion RVB (rouge-vert-bleu).

15. Système d'analyse rotatif selon la revendication 1,
dans lequel l'unité de génération de chromatogrammes (4200) calcule un ou plusieurs éléments parmi un type de composants de l'échantillon, un contenu de chaque composant et une valeur de facteur de rétention de chaque composant.
